(19) **Europäisches Patentamt / European Patent Office / Office européen des brevets**

(11) **EP 4 270 519 A1**

(12) # EUROPEAN PATENT APPLICATION
published in accordance with Art. 153(4) EPC

(43) Date of publication:
**01.11.2023 Bulletin 2023/44**

(21) Application number: **21910979.0**

(22) Date of filing: **23.12.2021**

(51) International Patent Classification (IPC):
*H01M 4/13* (2010.01)     *H01M 4/131* (2010.01)
*H01M 4/134* (2010.01)    *H01M 4/136* (2010.01)
*H01M 4/38* (2006.01)     *H01M 4/48* (2010.01)
*H01M 4/505* (2010.01)    *H01M 4/525* (2010.01)
*H01M 4/58* (2010.01)     *H01M 10/052* (2010.01)

(52) Cooperative Patent Classification (CPC):
H01M 4/13; H01M 4/131; H01M 4/134;
H01M 4/136; H01M 4/38; H01M 4/48; H01M 4/505;
H01M 4/525; H01M 4/58; H01M 10/052;
Y02E 60/10

(86) International application number:
**PCT/JP2021/047932**

(87) International publication number:
**WO 2022/138840 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.12.2020 JP 2020216151**

(71) Applicant: **Panasonic Intellectual Property
Management Co., Ltd.
Osaka-shi, Osaka 540-6207 (JP)**

(72) Inventor: **KAWADA Hiroshi
Kadoma-shi, Osaka 571-0057 (JP)**

(74) Representative: **Novagraaf International SA
Chemin de l'Echo 3
1213 Onex, Geneva (CH)**

(54) **POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(57)     The present invention provides a positive electrode active material for nonaqueous electrolyte secondary batteries, said positive electrode active material contributing to the achievement of a good balance between charge capacity and thermal stability. This positive electrode active material contains a lithium metal composite oxide which is represented by general formula $xLi_yNi_zM_{1-z}O_2$-$(1-x)Li_wNi_zM_{1-z}O_2$ (wherein $0.1 < x \le 1$, $1.5 \le y \le 2.5$, $0.4 < z \le 0.9$, $0.9 \le w \le 1.5$, and M represents one or more elements that are selected from the group consisting of transition metals, Al, Si, Sn, Ge, Sb, Bi, Mg, Ca and Sr); and the lithium metal composite oxide has a layered structure, while comprising Li element that is coordinated to the position of the oxygen tetrahedron.

EP 4 270 519 A1

# Figure 1

**Description**

TECHNICAL FIELD

The present disclosure generally relates to a positive electrode active material for a non-aqueous electrolyte secondary battery, and a non-aqueous electrolyte secondary battery.

BACKGROUND ART

Conventionally, a non-aqueous electrolyte secondary battery that performs charge and discharge by moving Li ions and the like between a positive electrode and a negative electrode have been widely used, and in recent years, further improvement of battery performance has been required. Patent Literature 1 discloses a secondary battery that inhibits decrease in a battery capacity while exhibiting an effect on over-discharge characteristics by including $Li_2NiO_2$ in the positive electrode to supply a sufficient amount of Li ions to the negative electrode during charge.

CITATION LIST

PATENT LITERATURE

PATENT LITERATURE 1: Japanese Translation of PCT International Application Publication No. 2005-521220

SUMMARY

TECHNICAL PROBLEM

Increasing a charge capacity (battery capacity) may deteriorate thermal stability. $Li_2NiO_2$ has poor reversibility of intercalating and deintercalating Li ions, and the art disclosed in Patent Literature 1, which may rather decrease the charge capacity of the battery by including $Li_2NiO_2$ in the positive electrode, still has room for improvement of achievement of both of the charge capacity and the thermal stability.

It is an advantage of the present disclosure to provide a positive electrode active material for a non-aqueous electrolyte secondary battery that contributes to the achievement of both of the charge capacity and the thermal stability.

SOLUTION TO PROBLEM

A positive electrode active material for a non-aqueous electrolyte secondary battery of an aspect of the present disclosure includes a lithium-metal composite oxide represented by the general formula $xLi_yNi_zM_{1-z}O_2$-$(1-x)Li_wNi_zM_{i-z}O_2$ ($0.1 < x \leq 1$, $1.5 \leq y \leq 2.5$, $0.4 < z \leq 0.9$, $0.9 \leq w \leq 1.5$, and M represents one or more elements selected from the group consisting of transition metals and Al, Si, Sn, Ge, Sb, Bi, Mg, Ca, and Sr), wherein the lithium-metal composite oxide has a layered structure, and has a Li element coordinated at a tetrahedral position of oxygen.

A non-aqueous electrolyte secondary battery of an aspect of the present disclosure comprises: a positive electrode including the above positive electrode active material for a non-aqueous electrolyte secondary battery; a negative electrode; and a non-aqueous electrolyte, wherein the negative electrode includes a negative electrode active material, and the negative electrode active material contains greater than or equal to 3% of one or a mixture of two or more selected from the group consisting of Si, SiC, $SiO_\alpha$ ($0 < \alpha < 2$), $Li_\beta SiO_\gamma$ ($1 < \beta \leq 4$ and $1 < y \leq 4$), Sn, $SnO_2$, Sb, and Ge.

ADVANTAGEOUS EFFECT OF INVENTION

According to the positive electrode active material for a non-aqueous electrolyte secondary battery of an aspect of the present disclosure, a pyrolysis temperature can be improved while improving the charge capacity of the battery.

BRIEF DESCRIPTION OF DRAWING

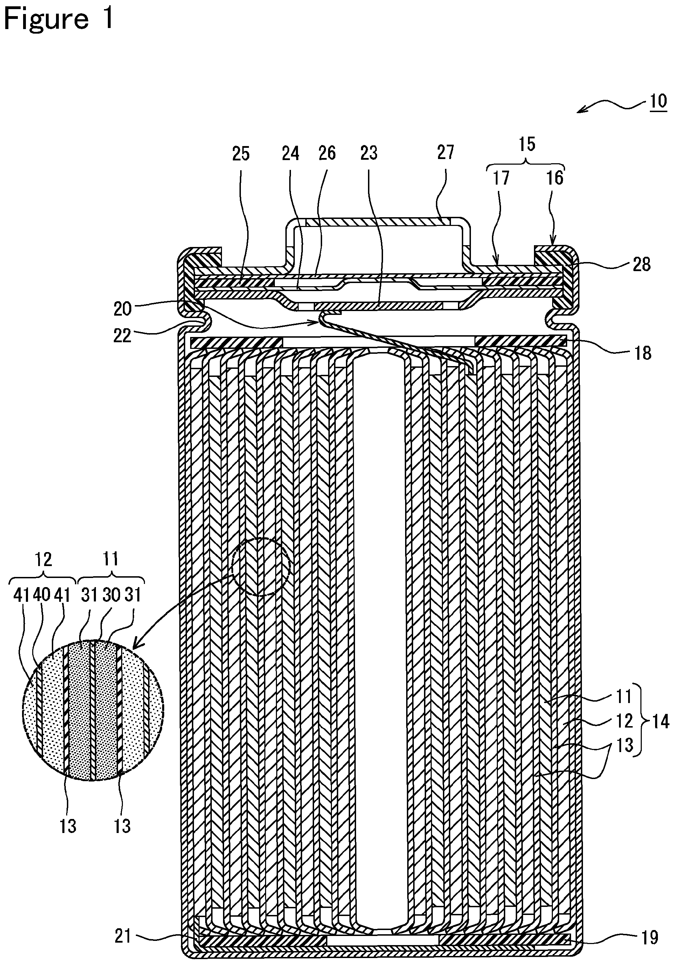

FIG. 1 is a sectional view of a non-aqueous electrolyte secondary battery of an example of an embodiment.

DESCRIPTION OF EMBODIMENTS

A non-aqueous electrolyte secondary battery performs charge and discharge by moving Li ions and the like between a positive electrode and a negative electrode. In the charge and discharge of the non-aqueous electrolyte secondary battery, some Li ions moved from the positive electrode to the negative electrode during the charge fail to be released from the negative electrode with absorption on a negative electrode active material during the discharge, resulting in a phenomenon of decrease in a capacity maintenance rate of the battery. This phenomenon is also observed when a common carbon-based material such as graphite is used, and particularly considerably observed when an irreversible material such as a Si-based material is used. Thus, to inhibit the decrease in the capacity maintenance rate of the charge and discharge, investigated is a method of supplying a sufficient amount of Li ions to the negative electrode during the charge by including $Li_2NiO_2$ as a Li filler in the positive electrode. However, $Li_2NiO_2$ has poor reversibility of intercalating and deintercalating Li ions, and including $Li_2NiO_2$ in the positive electrode may rather decrease the charge capacity of the battery. In addition, increasing the charge capacity lowers a pyrolysis temperature, which makes it difficult to achieve both of the charge capacity and the thermal stability.

Accordingly, the present inventors have made intensive investigation to solve the above problem, and consequently found that both of the charge capacity and thermal stability of the battery may be specifically achieved by using a lithium-metal composite oxide containing a predetermined content rate of Ni and having a specified coordination position of the Li element as a positive electrode active material. With a lithium-metal composite oxide represented by the general formula $xLi_yNi_zM_{i-z}O_2$-$(1-x)Li_wNi_zM_{i-z}O_2$, a higher content rate of Ni (larger y) increases the charge capacity but lowers the pyrolysis temperature. It is presumed that both of the charge capacity and the thermal stability are achieved because z within a range of $0.4 < z \leq 0.9$ can rise the pyrolysis temperature while keeping the sufficient charge capacity.

Hereinafter, an example of an embodiment of the non-aqueous electrolyte secondary battery according to the present disclosure will be described in detail. Hereinafter, a cylindrical battery in which a wound electrode assembly is housed in a cylindrical exterior will be exemplified, but the electrode assembly is not limited to the wound electrode assembly, and may be a stacked electrode assembly in which a plurality of positive electrodes and a plurality of negative electrodes are alternately stacked one by one with a separator interposed therebetween. The exterior is not limited to the cylindrical exterior, and may be, for example, a rectangular exterior, a coin-shaped exterior, or the like, or may be a battery case composed of laminated sheets including a metal layer and a resin layer.

FIG. 1 is a sectional view of a non-aqueous electrolyte secondary battery 10 of an example of an embodiment. As exemplified in FIG. 1, the non-aqueous electrolyte secondary battery 10 comprises an electrode assembly 14, a non-aqueous electrolyte (not illustrated), and a battery case 15 housing the electrode assembly 14 and the non-aqueous electrolyte. The electrode assembly 14 has a wound structure in which a positive electrode 11 and a negative electrode 12 are wound with a separator 13 interposed therebetween. The battery case 15 is composed of a bottomed cylindrical exterior housing can 16 and a sealing assembly 17 that seals an opening of the exterior housing can 16.

The electrode assembly 14 is composed of the elongated positive electrode 11, the elongated negative electrode 12, the two elongated separators 13, a positive electrode tab 20 bonded to the positive electrode 11, and a negative electrode tub 21 bonded to the negative electrode 12. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). The two separators 13 are formed to be one size larger than at least the positive electrode 11, and disposed so as to sandwich the positive electrode 11, for example.

The non-aqueous electrolyte secondary battery 10 comprises insulating plates 18 and 19 disposed in the upper and lower sides of the electrode assembly 14, respectively. In the example illustrated in FIG. 1, the positive electrode tub 20 attached to the positive electrode 11 extends through a through hole of the insulating plate 18 toward the sealing assembly 17 side, and the negative electrode tub 21 attached to the negative electrode 12 extends through an outside of the insulating plate 19 toward the bottom side of the exterior housing can 16. The positive electrode tub 20 is connected to a lower surface of a bottom plate 23 of the sealing assembly 17 by welding or the like, and a cap 27 of the sealing assembly 17 electrically connected to the bottom plate 23 becomes a positive electrode terminal. The negative electrode tub 21 is connected to a bottom inner surface of the exterior housing can 16 by welding or the like, and the exterior housing can 16 becomes a negative electrode terminal.

The exterior housing can 16 is, for example, a bottomed cylindrical metallic container. A gasket 28 is provided between the exterior housing can 16 and the sealing assembly 17, and thereby the inner space of the battery case 15 is sealed. The exterior housing can 16 has a grooved portion 22 formed by, for example, pressing a side wall thereof from an outside and supports the sealing assembly 17. The grooved portion 22 is preferably formed in a circular shape along a circumferential direction of the exterior housing can 16, and supports the sealing assembly 17 with the upper face thereof.

The sealing assembly 17 has a stacked structure of the bottom plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected to each other at each of central parts thereof, and the insulating member 25 is interposed between each of the circumferential parts. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, the separator 13, and the non-aqueous electrolyte, which constitute the non-aqueous electrolyte secondary battery 10, specifically the positive electrode active material included in a positive electrode mixture layer 31 constituting the positive electrode 11, will be described in detail.

[Positive Electrode]

The positive electrode 11 has a positive electrode current collector 30 and positive electrode mixture layers 31 formed on both surfaces of the positive electrode current collector 30. For the positive electrode current collector 30, a foil of a metal stable within a potential range of the positive electrode 11, such as aluminum and an aluminum alloy, a film in which such a metal is disposed on a surface layer thereof, and the like may be used. The positive electrode mixture layer 31 may include the positive electrode active material, a conductive agent, and a binder. The positive electrode 11 may be produced by, for example, applying a positive electrode mixture slurry including the positive electrode active material, the conductive agent, the binder, and the like on the surfaces of the positive electrode current collector 30, drying and then compressing the coating to form the positive electrode mixture layers 31 on both the surfaces of the positive electrode current collector 30.

Examples of the conductive agent included in the positive electrode mixture layer 31 include carbon-based materials such as carbon black, acetylene black, Ketjenblack, and graphite. Examples of the binder included in the positive electrode mixture layer 31 include a fluororesin such as polytetrafluoroethylene (PTFE) and polyvinylidene fluoride (PVdF), polyacrylonitrile (PAN), a polyimide, an acrylic resin, and a polyolefin. With these resins, carboxymethylcellulose (CMC) or a salt thereof, polyethylene oxide (PEO), and the like may be used in combination.

The positive electrode active material included in the positive electrode mixture layer 31 includes a lithium-metal composite oxide (Y) represented by the general formula $xLi_yNi_zM_{1-z}O_2-(1-x)Li_wNi_zM_{1-z}O_2$ ($0.1 < x \le 1$, $1.5 \le y \le 2.5$, $0.4 < z \le 0.9$, $0.9 \le w \le 1.5$, and M represents one or more elements selected from the group consisting of transition metals and Al, Si, Sn, Ge, Sb, Bi, Mg, Ca, and Sr). The positive electrode active material may include a lithium-metal composite oxide other than the lithium-metal composite oxide (Y) or another compound within a range not impairing the object of the present disclosure.

The lithium-metal composite oxide (Y) is of, for example, secondary particles formed by aggregation of a plurality of primary particles. A particle diameter of the primary particles constituting the secondary particles is, for example, greater than or equal to 0.05 $\mu$m and less than or equal to 1 $\mu$m. The particle diameter of the primary particle is measured as a diameter of a circumscribed circle in a particle image observed with a scanning electron microscope (SEM).

A particle diameter of the secondary particles of the lithium-metal composite oxide (Y) is, for example, greater than or equal to 3 $\mu$m and less than or equal to 30 $\mu$m as a median diameter (D50) on a volumetric basis. The D50 means a particle diameter at which a cumulative frequency is 50% from a smaller particle diameter side in a particle size distribution on a volumetric basis. The particle size distribution of the lithium-metal composite oxide (Y) may be measured by using a laser diffraction-type particle size distribution measuring device (for example, MT3000II, manufactured by MicrotracBEL Corp.) with water as a dispersion medium.

In the general formula $xLi_yNi_zM_{i-z}O_2-(1-x)Li_wNi_zM_{i-z}O_2$, which represents the lithium-metal composite oxide (Y), M preferably represents one or more elements selected from the group consisting of Ni, Co, Mn, Fe, and Al.

The lithium-metal composite oxide (Y) has a layered structure, and has a Li element coordinated at a tetrahedral position of the oxygen in one primary particle. The layered structure of the lithium-metal composite oxide (Y) includes, for example, a transition metal layer, a Li layer, and an oxygen layer. The Li layer is a layer in which Li is reversibly intercalated and deintercalated.

The lithium-metal composite oxide (Y) may mainly have the space group R3-m, and have a region of the space group P3-m1 as a stacking fault. Both of the charge capacity and the thermal stability may be achieved by mainly having the space group R3-m and introducing the region of the space group P3-m1 as the stacking fault. In the general formula $xLi_yNi_zM_{i-z}O_2-(1-x)Li_wNi_zM_{i-z}O_2$, which represents the lithium-metal composite oxide (Y), x and (1-x) represent rates of the region of the space group P3-m1 and the region of the space group R3-m, respectively. x satisfies $0.1 < x \le 1$, and preferably $0.1 < x < 0.4$. When x is less than 0.4, an average discharge voltage of the battery may be increased.

In the general formula $xLi_yNi_zM_{i-z}O_2-(1-x)Li_wNi_zM_{i-z}O_2$, which represents the lithium-metal composite oxide (Y), the value x may be calculated by the following formula from an integrated intensity S1 within greater than or equal to 17.1° and less than 18.1° and an integrated intensity S2 within greater than or equal to 18.1° and less than 19.1°, which are measured by an XRD measurement with CuK$\alpha$.

$$x = S1 / (S1+S2)$$

The XRD measurement may be performed under the following condition by using a powder X-ray diffraction apparatus (manufactured by Rigaku Corporation, product name "RINT-TTR", radiation source Cu-K$\alpha$), for example.

Measuring Range: 15-120°
Scanning Rate: 4°/min
Analyzing Range: 30-120°
Background: B-spline
Profile Function: Split pseudo-Voigt function
ICSD No.: 98-009-4814

In a discharged state until 1.5 V, the lithium-metal composite oxide (Y) may have a composition represented by the general formula $xLi_yMO_2$-$(1-x)Li_zMO_2$ ($0 < x < 0.4$, $1.5 \leq y \leq 2.5$, $0.9 \leq z \leq 1.1$, and M is the above M). Although changed by charge and discharge of the battery, the composition of the lithium-metal composite oxide (Y) recovers to the above composition by discharge until 1.5 V.

The lithium-metal composite oxide (Y) included in the positive electrode active material may be produced by, for example: immersing a lithium-metal composite oxide (X) having the space group R3-m and Li metal in a benzophenone-2-methyltetrahydrofuran (2-MeTHF) solution in which benzophenone is dissolved in 2-MeTHF; stirring the mixture at a room temperature for greater than or equal to 1 hour and less than or equal to 24 hours; and filtering the mixture. The above steps introduce the space group P3-m1 as the stacking fault into the lithium-metal composite oxide (X) having the space group R3-m. The rate of introducing the space group P3-m1 may be regulated by, for example, the temperature, the concentration of benzophenone in 2-MeTHF, the stirring time, and the like.

The lithium-metal composite oxide (X) having the space group R3-m may be synthesized by, for example: adding and mixing a Li source with a metal composite compound containing no Li; and calcining the mixture at greater than or equal to 200°C and less than or equal to 1050°C. Examples of the metal composite compound include an oxide, hydroxide, and carbonate compound containing Ni, Mn, and the like. Examples of the Li source include LiOH. For example, increasing a content rate of Ni in the metal composite compound increases a content rate of Ni in the lithium-metal composite oxide (Y). The metal composite compound may be produced by, for example, heat-treating a hydroxide produced by a coprecipitation method.

[Negative Electrode]

The negative electrode 12 has a negative electrode current collector 40 and negative electrode mixture layers 41 formed on both surfaces of the negative electrode current collector 40. For the negative electrode current collector 40, a foil of a metal stable within a potential range of the negative electrode 12, such as copper and a copper alloy, a film in which such a metal is disposed on a surface layer thereof, and the like may be used. The negative electrode mixture layer 41 may include a negative electrode active material and a binder. The negative electrode 12 may be produced by, for example, applying a negative electrode mixture slurry including the negative electrode active material, the binder, and the like on the surfaces of the negative electrode current collector 40, drying and subsequently rolling the coating to form the negative electrode mixture layers 41 on both the surfaces of the negative electrode current collector 40. In the charged state, lithium metal may precipitate on the negative electrode 12.

The negative electrode active material included in the negative electrode mixture layer 41 is not particularly limited as long as it may reversibly occlude and release lithium ions, and carbon-based materials such as graphite are typically used. The graphite may be any of natural graphite such as flake graphite, massive graphite, and amorphous graphite, and artificial graphite such as massive artificial graphite and graphitized mesophase carbon microbead. As the negative electrode active material, a metal that forms an alloy with Li, such as Si and Sn, a metal compound including Si, Sn, and the like, a lithium-titanium composite oxide, and the like may also be used. In addition, a material on which a carbon coating is provided may also be used. The negative electrode active material preferably contains greater than or equal to 3% of one or a mixture of two or more selected from the group consisting of Si, SiC, $SiO_\alpha$ ($0 < \alpha < 2$), $Li_\beta SiO_\gamma$ ($1 < \beta \leq 4$ and $1 < y \leq 4$), Sn, $SnO_2$, Sb, and Ge.

For the binder included in the negative electrode mixture layer 41, a fluorine-containing resin such as PTFE and PVdF, PAN, a polyimide, an acrylic resin, a polyolefin, and the like may be used as in the case of the positive electrode 11, but styrene-butadiene rubber (SBR) is preferably used. The negative electrode mixture layer 41 may include CMC or a salt thereof, polyacrylic acid (PAA) or a salt thereof, polyvinyl alcohol (PVA), and the like.

[Separator]

For the separator 13, a porous sheet having an ion permeation property and an insulation property is used, for example. Specific examples of the porous sheet include a fine porous, thin film, a woven fabric, and a nonwoven fabric.

As a material for the separator, a polyolefin such as polyethylene and polypropylene, cellulose, and the like are suitable. The separator 13 may have a single-layered structure, or may have a stacked structure. On a surface of the separator 13, a resin layer having high heat resistance, such as an aramid resin, and a filler layer including a filler of an inorganic compound may be provided.

[Non-Aqueous Electrolyte]

The non-aqueous electrolyte includes a non-aqueous solvent and an electrolyte salt dissolved in the non-aqueous solvent, for example. For the non-aqueous solvent, esters, ethers, nitriles such as acetonitrile, amides such as dimethylformamide, a mixed solvent of two or more thereof, and the like may be used, for example. The non-aqueous solvent may contain a halogen-substituted derivative in which hydrogen of these solvents is at least partially replaced with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the above esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone (GBL) and γ-valerolactone (GVL); and chain carboxylates such as methyl acetate, ethyl acetate, propyl acetate, methyl propionate (MP), and ethyl propionate (EP).

Examples of the above ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include $LiBF_4$, $LiClO_4$, $LiPF_6$, $LiAsF_6$, $LiSbF_6$, $LiAlCl_4$, $LiSCN$, $LiCF_3SO_3$, $LiCF_3CO_2$, $Li(P(C_2O_4)F_4)$, $LiPF_{6-x}(C_nF_{2n+1})_x$ (1 < x < 6, and n represents 1 or 2), $LiB_{10}Cl_{10}$, LiCl, LiBr, LiI, lithium chloroborane, a lithium lower aliphatic carboxylate, borate salts such as $Li_2B_4O_7$ and $Li(B(C_2O_4)F_2)$, and imide salts such as $LiN(SO_2CF_3)_2$ and $LiN(C_1F_{2l+1}SO_2)(C_mF_{2m+1}SO_2)$ { 1 and m represent an integer of greater than or equal to 0}. As the lithium salt, these salts may be used singly or a plurality of kinds thereof may be mixed to use. Among them, $LiPF_6$ is preferably used from the viewpoints of ion conductivity, electrochemical stability, and the like. A concentration of the lithium salt is, for example, greater than or equal to 0.8 mol and less than or equal to 1.8 mol per liter of the non-aqueous solvent. Furthermore, vinylene carbonate and a propanesultone-based additive may be added.

EXAMPLES

Hereinafter, the present disclosure will be further described with Examples and Comparative Examples, but the present disclosure is not limited to the following Examples.

<Example>

[Production of Positive Electrode Active Material]

A nickel-manganese composite hydroxide obtained by coprecipitation and having a composition of $Ni_{0.5}Mn_{0.5}(OH)_2$ was heat-treated at 500°C to obtain a nickel-manganese composite oxide having a composition of $Ni_{0.5}Mn_{0.5}O_2$. Then, the nickel-manganese composite oxide and LiOH were mixed so that a mole ratio of a total amount of Ni and Mn to Li was 1.02:1. This mixture was calcined at 900°C for 10 hours, and then crushed to obtain a lithium-metal composite oxide (X) having R3-m.

The lithium-metal composite oxide (X) and Li metal were immersed in a 1 mol/L benzophenone-2Me-THF solution, the mixture was stirred at a room temperature for 12 hours, and then filtered to produce a lithium-metal composite oxide (Y), which was used as a positive electrode active material. As a result of an XRD measurement, x in this positive electrode active material was 0.49.

[Production of Positive Electrode]

The above positive electrode active material, acetylene black, and polyvinylidene fluoride (PVdF) were mixed at a solid content mass ratio of 96.3:2.5:1.2, an appropriate amount of N-methyl-2-pyrrolidone (NMP) was added thereinto, and then this mixture was kneaded to prepare a positive electrode mixture slurry. This positive electrode mixture slurry was applied on both surfaces of a positive electrode core made of aluminum foil, the coating was dried and then rolled by using a roller, and cut to a predetermined electrode size to obtain a positive electrode in which positive electrode mixture layers were formed on both the surfaces of the positive electrode core.

[Preparation of Non-Aqueous Electrolyte]

Fluoroethylene carbonate (FEC), ethylene carbonate (EC), and ethyl methyl carbonate (EMC) were mixed at a volume ratio of 1:1:6 to obtain a non-aqueous solvent. Into this non-aqueous solvent, $LiPF_6$ was dissolved at a concentration of 1.0 mol/L to obtain a non-aqueous electrolyte.

[Production of Test Cell]

Lead wires were attached to the above positive electrode and a counter electrode made of Li metal, respectively, and the positive electrode and the counter electrode were oppositely disposed with a separator made of a polyolefin interposed therebetween to produce an electrode assembly. This electrode assembly and the above non-aqueous electrolyte were enclosed in an exterior composed of an aluminum laminated film to produce a test cell.

[Measurement of Charge Capacity]

Under a temperature environment at 25°C, the test cell was charged at a constant current of 0.2 C until a cell voltage reached 4.5 V, and charged at a constant voltage of 4.5 V until a current value reached 0.02 C. Thereafter, the test cell was discharged at a constant current of 0.2 C until the cell voltage reached 2.5 V. A charge capacity in this time was measured.

[Measurement of Pyrolysis Temperature]

A pyrolysis temperature of the above positive electrode active material (lithium-metal composite oxide (Y)) was measured by using differential scanning calorimetry (DSC). The measurement condition was under a nitrogen flow and a heating rate of 10 °C/min.

<Example 2>

A test cell was produced and evaluated in the same manner as in Example 1 except that, in the production of the positive electrode active material, a nickel-manganese composite oxide having a composition of $Ni_{0.8}Mn_{0.2}O_2$ was used. As a result of the XRD measurement, x in the positive electrode active material was 0.57.

<Comparative Example>

A test cell was produced and evaluated in the same manner as in Example 1 except that $Li_2NiO_2$ having the space group Immm was used as the positive electrode active material.
Table 1 shows the charge capacity and pyrolysis temperature of Examples and Comparative Example. Table 1 also shows the crystal structure of the positive electrode active material and the rate of Ni (Ni content rate) relative to the total amount of metal elements excluding Li in the positive electrode active material.

[Table 1]

| | Crystal structure | Ni content rate [mol%] | Charge capacity [mAh/g] | Pyrolysis temperature [°C] |
|---|---|---|---|---|
| Example 1 | R3-m + P3-m1 | 50 | 355.0 | 213 |
| Example 2 | R3-m + P3-m1 | 80 | 406.1 | 201 |
| Comparative Example 1 | Immm | 100 | 406.9 | 191 |

As shown in Table 1, the test cells of Examples may rise the pyrolysis temperature with keeping the sufficient charge capacity compared with the test cell of Comparative Example, having achieved both of the charge capacity and the thermal stability.

REFERENCE SIGNS LIST

10 Non-aqueous electrolyte secondary battery, 11 Positive electrode, 12 Negative electrode, 13 Separator, 14 Electrode assembly, 15 Battery case, 16 Exterior housing can, 17 Sealing assembly, 18, 19 Insulating plate, 20 Positive electrode tub, 21 Negative electrode tub, 22 Grooved portion, 23 Bottom plate, 24 Lower vent member, 25 Insulating member, 26 Upper vent member, 27 Cap, 28 Gasket, 30 Positive electrode current collector, 31 Positive electrode mixture layer, 40 Negative electrode current collector, 41 Negative electrode mixture layer

**Claims**

1. A positive electrode active material for a non-aqueous electrolyte secondary battery, including a lithium-metal composite oxide represented by the general formula $xLi_yNi_zM_{1-z}O_2$-$(1-x)Li_wNi_zM_{1-z}O_2$, wherein $0.1 < x \leq 1$, $1.5 \leq y \leq 2.5$, $0.4 < z \leq 0.9$, $0.9 \leq w \leq 1.5$, and M represents one or more elements selected from the group consisting of transition metals and Al, Si, Sn, Ge, Sb, Bi, Mg, Ca, and Sr, wherein
   the lithium-metal composite oxide has a layered structure, and has a Li element coordinated at a tetrahedral position of oxygen.

2. The positive electrode active material for a non-aqueous electrolyte secondary battery according to claim 1, wherein the lithium-metal composite oxide mainly has a space group R3-m, and has a region of a space group P3-m1 as a stacking fault.

3. The positive electrode active material for a non-aqueous electrolyte secondary battery according to claim 1 or 2, wherein the M represents one or more elements selected from the group consisting of Ni, Co, Mn, Fe, and Al.

4. A non-aqueous electrolyte secondary battery, comprising:

   a positive electrode including the positive electrode active material for a non-aqueous electrolyte secondary battery according to any one of claims 1 to 3;
   a negative electrode; and
   a non-aqueous electrolyte, wherein
   the negative electrode includes a negative electrode active material, and
   the negative electrode active material contains greater than or equal to 3% of one or a mixture of two or more selected from the group consisting of Si, SiC, $SiO_\alpha$ where $0 < \alpha < 2$, $Li_\beta SiO_\gamma$ where $1 < \beta \leq 4$ and $1 < y \leq 4$, Sn, $SnO_2$, Sb, and Ge.

5. The non-aqueous electrolyte secondary battery according to claim 4, wherein in a charged state, lithium metal precipitates on the negative electrode.

6. The non-aqueous electrolyte secondary battery according to claim 4 or 5, wherein in a discharged state until 1.5 V, the lithium-metal composite oxide has a composition represented by the general formula $xLi_yNi_zM_{i-z}O_2$-$(1-x)Li_wNi_zM_{i-z}O_2$, wherein $0.1 < x \leq 1$, $1.5 \leq y \leq 2.5$, $0.4 < z \leq 0.9$, $0.9 \leq w \leq 1.5$, and M is the above M.

# Figure 1

## INTERNATIONAL SEARCH REPORT

International application No.

**PCT/JP2021/047932**

### A. CLASSIFICATION OF SUBJECT MATTER

*H01M 4/13*(2010.01)i; *H01M 4/131*(2010.01)i; *H01M 4/134*(2010.01)i; *H01M 4/136*(2010.01)i; *H01M 4/38*(2006.01)i;
*H01M 4/48*(2010.01)i; *H01M 4/505*(2010.01)i; *H01M 4/525*(2010.01)i; *H01M 4/58*(2010.01)i; *H01M 10/052*(2010.01)i
FI: H01M4/525; H01M4/505; H01M4/13; H01M4/131; H01M4/134; H01M4/136; H01M4/38 Z; H01M4/48; H01M4/58;
H01M10/052

According to International Patent Classification (IPC) or to both national classification and IPC

### B. FIELDS SEARCHED

Minimum documentation searched (classification system followed by classification symbols)

H01M4/13; H01M4/131; H01M4/134; H01M4/136; H01M4/38; H01M4/48; H01M4/505; H01M4/525; H01M4/58;
H01M10/052

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2012-142156 A (SONY CORP.) 26 July 2012 (2012-07-26)<br>paragraphs [0026], [0027], table 1 | 1-6 |
| A | JP 10-158017 A (SHARP CORP.) 16 June 1998 (1998-06-16)<br>paragraphs [0013]-[0028] | 1-6 |
| A | JP 2016-199414 A (ASAHI GLASS CO., LTD.) 01 December 2016 (2016-12-01)<br>paragraphs [0020], [0021] | 1-6 |
| A | WO 2020/026486 A1 (PANASONIC INTELLECTUAL PROPERTY MANAGEMENT CO.,<br>LTD.) 06 February 2020 (2020-02-06)<br>paragraphs [0016]-[0033] | 1-6 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 March 2022** | **29 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/047932**

| Patent document cited in search report | | | Publication date (day/month/year) | Patent family member(s) | | | Publication date (day/month/year) |
|---|---|---|---|---|---|---|---|
| JP | 2012-142156 | A | 26 July 2012 | US | 2012/0164533 | A1 | |
| | | | | paragraphs [0030], [0031], table 1 | | | |
| | | | | CN | 102569878 | A | |
| JP | 10-158017 | A | 16 June 1998 | US | 5955219 | A | |
| | | | | column 3, line 21 to column 6, line 14 | | | |
| | | | | EP | 845436 | A1 | |
| JP | 2016-199414 | A | 01 December 2016 | US | 2016/0301065 | A1 | |
| | | | | paragraphs [0047], [0048] | | | |
| | | | | CN | 106058236 | A | |
| WO | 2020/026486 | A1 | 06 February 2020 | CN | 112313817 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005521220 A